Europäisches Patentamt

European Patent Office

Office européen des brevets

(19)

(11) Publication number: **0 334 504**
**A2**

# (12) EUROPEAN PATENT APPLICATION

(21) Application number: 89302214.5

(22) Date of filing: 06.03.89

(51) Int. Cl.⁴: **G05D 7/01**

(30) Priority: 21.03.88 GB 8806699

(43) Date of publication of application:
27.09.89 Bulletin 89/39

(84) Designated Contracting States:
**DE FR GB**

(71) Applicant: **UNITED KINGDOM ATOMIC
ENERGY AUTHORITY
11 Charles II Street
London SW1Y 4QP(GB)**

(72) Inventor: **Glass, David
Ivy Cottage Brough
Thurso Caithness(GB)**

(74) Representative: **Owen, Geoffrey John et al
Patents Branch United Kingdom Atomic
Energy Authority 11 Charles II Street
London SW1Y 4QP(GB)**

(54) **Fluid flow control devices.**

(57) A fluid flow control device has a collapsible flow conduit 53 which is responsive to pressure difference between the interior and exterior of the conduit to collapse when the difference is too large. In one form the exterior is defined by a chamber open at an upstream end and closed at a downstream end. The device may be used as a sleeve at the inlet and outlet ends of tubes in a tube and shell heat exchanger to restrict flow in the event of a tube breach; in this case the exterior of the conduit is defined by a header chamber. The conduit may be a Venturi or flattened at a free outlet end and may have a wall which increases in thickness away from a free end.

EP 0 334 504 A2

## Fluid Flow Control Devices

This invention relates to fluid flow control devices.

For example the device may be associated with tube and shell heat exchangers in which a first fluid at relatively high pressure is circulated through a bank of tubes extending between inlet and outlet headers, the tubes passing through a shell through which a second fluid is circulated to effect heat exchange between the two fluids. Such a heat exchanger is hereinafter referred to as being "of the kind specified".

In one specific example of the invention, the heat exchanger comprises a steam generator for use in a liquid metal cooled fast neutron reactor plant, heat exchange being effected between water/steam conducted through the tube bank at high pressure and liquid sodium circulating through the shell externally of the tubes. In such a generator there is a risk, albeit remote, that a breach may occur in one of the tubes, leading to leakage from the high pressure water side to the sodium side. The resulting sodium-water reaction could then feasibly cause failure of neighbouring tubes with the consequence that if failure of other tubes propagates rapidly the pressure created may damage the sodium circuit.

However the invention is not restricted to control devices for use with heat exchangers.

According to this invention a fluid flow control device comprises a conduit for fluid flow, characterised in that the conduit is collapsible in response to difference in fluid pressure between the interior and exterior of the conduit to restrict fluid flow through the conduit.

The device may include a chamber around the conduit, the chamber being open at an upstream end and closed at a downsteam end. The chamber may be formed by an external conduit. The exterior of the conduit may be defined by a housing.

The invention includes a tube and shell heat exchanger of the kind specified in which ends of at least some of the tubes open into the associated header via devices as above which are exposed to the pressure prevailing within the header, the conduits of the devices each being collapsible when subject to the pressure differential that arises between the header and the interior of the conduit if a breach in the respective tube occurs, whereby flow through the respective tube is restricted in response to collapse of the conduit(s) associated with that tube.

Preferably each tube of the tube bank is provided with a collapsible sleeve at both its inlet end and its outlet end.

The conduit may be of waisted configuration so as to create a pressure drop by means of the Venturi effect. In one embodiment, each sleeve comprises a pair of oppositely tapering conical sections meeting at a waist intermediate the ends of the sleeve. In another embodiment, the sleeve may be of generally cylindrical configuration having a smaller cross-section orifice at its free end in order to reduce pressure within the sleeve. In a further embodiment, the free end of the sleeve may be flattened, for example so that it has an oval cross-section, to aid control of collapse.

At its fixed end, the sleeve may be of progressively increasing wall thickness to reduce the risk of fracture during collapse.

To promote further understanding, embodiments of the invention will now be described by way of example only with reference to the accompanying drawings in which:

Figure 1 is a diagrammatic sectional view of a sodium-water/steam heat exchanger in which only a single water/steam tube is shown for the sake of clarity;

Figure 2 is an enlarged view showing a flow restrictor according to the invention;

Figure 3 is a similar view of a second form of flow restrictor;

Figure 4 is a view of a further form of flow restrictor;

Figures 5, 6 and 7 are respectively front, end and fragmentary sectional views of another form of flow restrictor;

Figures 8, 9 and 10 are respectively front, end and side views of yet another form of flow restrictor;

Figure 11 is a diagrammatic sectional view of a flow limiter incorporating an orifice to produce a required pressure differential;

Figure 12 is a view of a collapsing tube in the form of a venturi; and

Figure 13 shows another arrangement.

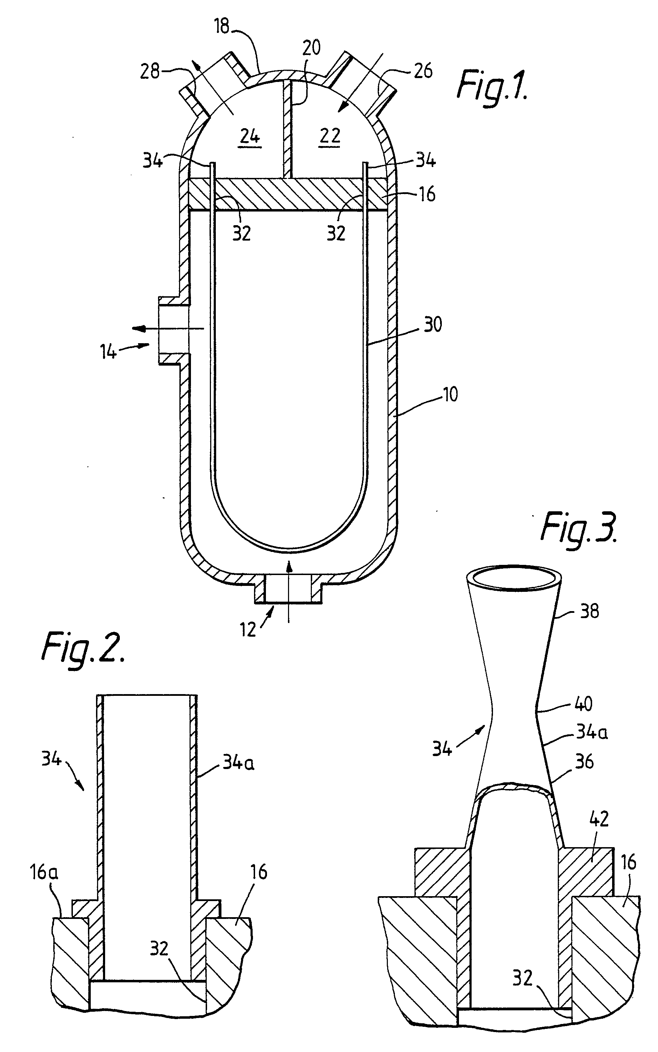

Referring to Figure 1, a tube-in-shell heat exchanger comprises a shell 10 having an inlet 12 and an outlet 14. A tube plate 16 is mounted within the shell 10 and together with a housing comprising a domed upper end 18 of the exchanger and a divider 20 defines an inlet header chamber 22 and an outlet header chamber 24 each provided with a respective port 26, 28. A bank of U-shaped tubes 30, consisting of many hundreds of tubes (only one of which is shown), is connected to the tube plate 16 to provide flow paths between the inlet header 22 and the outlet header 24. Each tube 30 may terminate at each end at the underside of the tube plate 16 and may be welded or otherwise secured to the tube plate 16 so as to be in registry with openings 32 in the plate 16. The heat exchanger may for example comprise a steam generator for use in conjunction with the secondary sodium circuit of a sodium cooled fast neutron nuclear reactor, in which case hot liquid sodium is supplied to the inlet 12 for circulation within that part of the shell 10 below the tube plate 16 before discharge via the outlet 14. Water at high pressure is supplied to the inlet header 22 via the inlet port 26. The water passes through the bank of tubes 30 and the resulting water/steam enters the outlet header 24 for discharge via the outlet port 28.

In normal operation, the pressure on the water/steam side of a tube is significantly higher than on the sodium side. If however a breach occurs in a tube, loss of pressure occurs within the breached tube and, as a result, water/steam tends to flow into the tube from both ends of the breached tube. The resulting sodium-water reaction may damage neighbouring tubes. To prevent propagation of failure to neighbouring tubes it is therefore necessary to limit the amount of water that can subsequently flow through the breached tube. This is achieved by means of flow restrictors 34, to be described below, at each end of each tube 30.

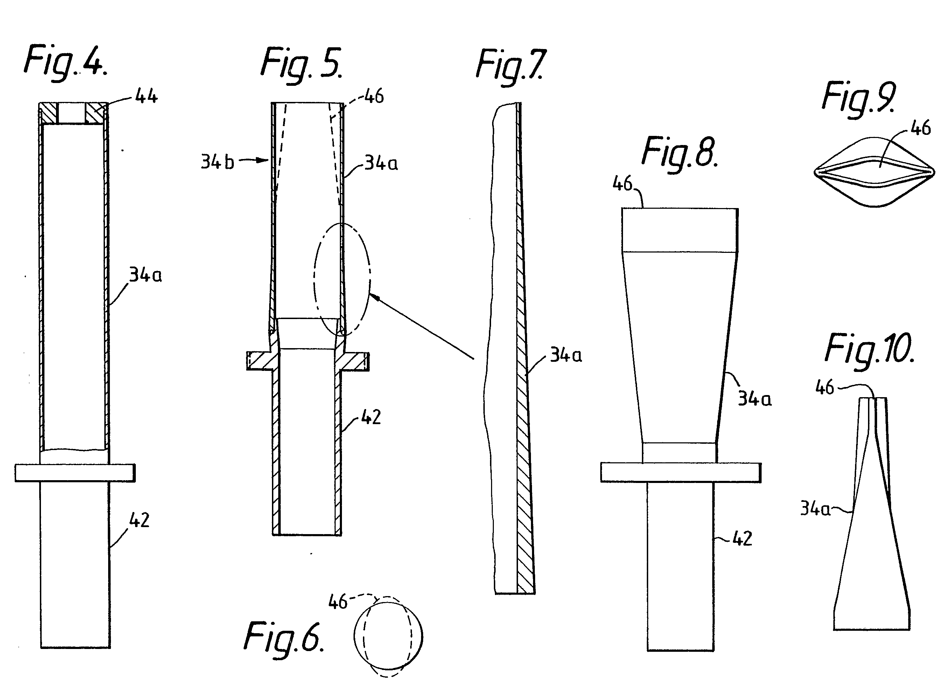

As shown in Figure 2, each flow restrictor 34 may take the form of a generally cylindrical sleeve 349 connected to the upper face 169 of the tube plate 16 so that the associated tube 30 opens into the inlet header or the outlet header via one of the sleeves 34a. Water entering the flow restrictor 34 from the inlet header 22 will increase in velocity since the total cross-section of the tubes 30 is less than that of the header 22. The exterior of the restrictor 34 is therefore exposed to a greater pressure than its interior. The sleeve 34a is designed so that it is sufficiently strong to withstand the net external pressure developed during normal flow conditions. In the event of a rupture of the U-tube 30, the net external pressure to which each restrictor is subject (both at the inlet header and at the outlet header) increases substantially. The sleeve 34a is designed so that, under these conditions, it cannot withstand this pressure difference and begins to collapse inwards on itself. Once collapse begins, the cross-sectional area of the sleeve 34a reduces resulting in an increased flow velocity with a consequential increase in the pressure difference - hence accelerating the collapse. Ideally collapse will be complete so that the flow path through the associated U-tube 30 is completely cut off at both ends. However, in practice, this may not be necessary since the main requirement is to reduce leakage from the breached tube to a level below that at which propagation of failure in neighbouring tubes will result. Once a leakage occurs, this can be detected by appropriate means such as a hydrogen detector which may then trigger shut-down of the generator to permit remedial action. The restrictors 34 allow damage due to failure propagation to be avoided during the short time interval between tube rupture and detection of a sodium-water interaction.

The sleeve 34a is fabricated from a suitably ductile material (such as annealed stainless steel) so that plastic deformation occurs without fracture.

Figure 3 illustrates a modified flow restrictor 34 in which the sleeve comprises conical sections 36, 38 meeting at a waist 40. The sleeve 34a is shown welded to a ferrule 42 fitted into the upper end of the opening 32. The sleeve in this instance acts as a Venturi and enhances the pressure reduction internally of the sleeve. As in the embodiment of Figure 2, the sleeve of Figure 3 will withstand the pressure difference prevailing in normal conditions but undergoes collapse on loss of pressure due to tube rupture.

In the embodiment of Figure 4 the sleeve 34a is cylindrical and is mounted on a ferrule 42 but, in this case, the pressure reduction internally of the sleeve is enhanced by means of an orifice-defining insert 44. The inserts 44 may also serve to control flow distribution between the tubes and prevent parallel channel instability, ie in the same way as the ferrules 42 are used conventionally.

In the embodiment of Figures 5 to 7, the restrictor sleeve 34a is flattened adjacent its free end 34b to form an oval-section mouth 46 (as shown in broken outline in Figures 5 and 6). Figure 7 illustrates how the sleeve may be designed with a progressively increasing wall thickness in a direction towards the ferrule 42. This thickening (which may also be employed in the other embodiments described herein) serves to reduce the risk of fracture of the sleeve during collapse.

In the embodiment of Figures 8 to 10, the sleeve is partially flattened at its free end to define a slit-like mouth 46 such that when the mouth 46 closes, it closes fully. This embodiment may be manufactured by flattening a round section sleeve and then re-opening the flattened end to the desired extent.

The invention is not restricted to tube-in-shell heat exchangers, and the restrictors of Figures 1 to 10 may find use in other fields.

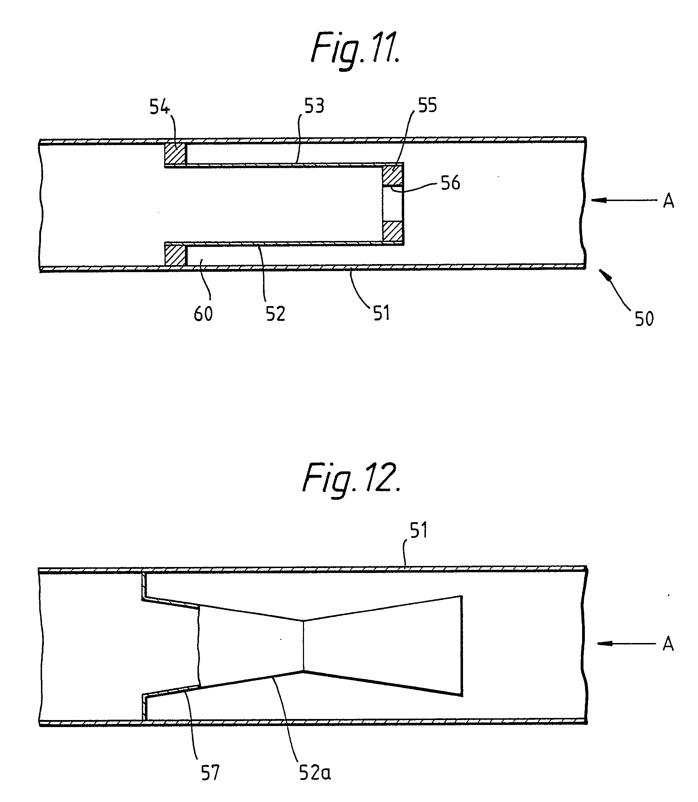

For example the restrictions of Figures 11, 12 may find use in a fluid system in which it is desired to limit the rate at which fluid escapes from the system in the event of rupture of a fluid containment. Limitation of flow may be achieved by installing a device which will permit flow rates of a specified magnitude but which will actuate to restrict the flow path in the event of higher flow rates occurring.

In general the flow limiting device consists of a thin-walled tube manufactured from a ductile material and installed within the system so that fluid flows through the device. The device is designed such that flow will result in the static pressure inside the tube being less than the pressure outside. This pressure differential may be achieved in several ways, for example by an orifice at an entry to the tube or by constructing the tube in the form of a venturi. The device is designed such that the tube will collapse when the pressure differential reaches a pre-determined value, thus restricting flow.

Thus in Figure 11 a flow restricting device 50 comprises an outer duct 51 in which fluid flow is as arrow A and located in the duct 51 is a restrictor 52 in the form of a collapsible tube 53 coaxial with tube 51 and secured at one end by an annulus 54 to the inner surface 55 of duct 51 and at the other end having an internal annulus 55 defining a central orifice 56. A chamber 60 is thus defined outside tube 53 which is open at an upstream end and closed at a downstream end.

In Figure 12 the collapsible tube 52a is in the form of a venturi which has the advantage that under normal operation pressure head is recovered in the divergent section 57 of the venturi and pressure losses are reduced.

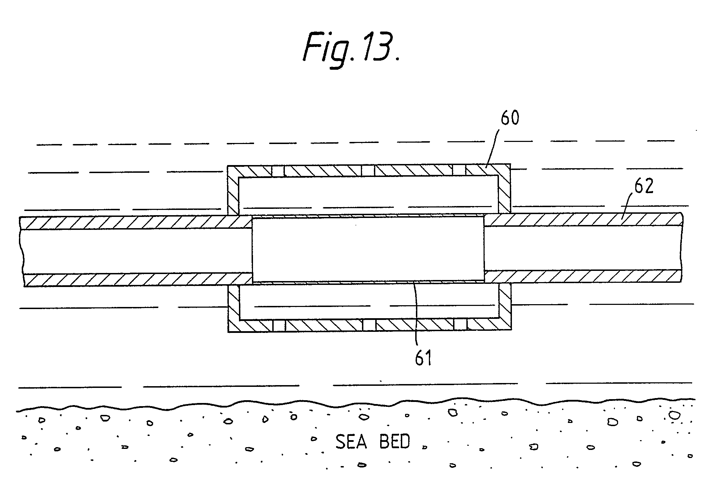

In the arrangement of Figure 13 the differential pressure required to collapse the tube 53 is produced, not by fluid dynamic forces, but by the reduction of internal pressure where the external pressure exceeds atmospheric pressure. In Figure 13 the device is installed in a sub-sea pipeline carrying oil or gas. In the event of rupture of the pipe-line, at for example the above-sea platform at which the pipe-line terminates, the internal pressure in the pipeline will be reduced so that the flow restrictor is unable to withstand the static head at the sea level and thus the tube 61 collapses, either completely or to a pre-determined extent. A perforated cage 60 surrounds a thin-walled element 61 in the tube 62.

## Claims

1. A fluid flow control device comprising a conduit for fluid flow, characterised in that the conduit (70, 53, 57, 61) is collapsible in response to difference in fluid pressure between the interior and exterior of the conduit to restrict fluid flow through the conduit.

2. A device as claimed in Claim 1, characterised by a chamber around the conduit (53 or 57), the chamber being open at an upstream end and closed at a downstream end.

3. A device as claimed in Claim 1 or Claim 2, in which the conduit (57) is of waisted configuration so as to create a pressure drop by means of the venturi effect.

4. A device as claimed in Claim 2 or Claim 3, in which the chamber is formed by an outer conduit (51).

5. A device as claimed in Claim 1, in which the exterior of the conduit is defined by a housing (18).

6. A device as claimed in Claim 5, in which the conduit (34a) is of generally cylindrical configuration having a smaller cross-section orifice (44) at a free end to reduce pressure within the conduit.

7. A device as claimed in Claim 5 or Claim 6, in which a free end (46) of the conduit is flattened to aid control of collapse.

8. A device as claimed in any of Claims 5 to 7, in which the conduit is of progressively increasing wall thickness away from a free end.

9. A device as claimed in Claim 5 in which the conduit (36, 38) is of waisted configuration so as to create a pressure drop by means of the venturi effect.

10. A tube and shell heat exchanger of the kind specified in which ends of at least some of the tubes open into the associated header via devices as claimed in any of Claims 5 to 9, which are exposed to the pressure prevailing within the header, the conduits of the devices each being collapsible when subject to the pressure differential that arises between the header and the interior of the conduit if a breach in the respective tube occurs, whereby flow through the respective tube is restricted in response to collapse of the conduit(s) associated with that tube.

11. A heat exchanger as claimed in Claim 10, in which each tube (30) of the tube bank is provided with a collapsible conduit in the form of a sleeve (34a) at both the inlet end and the outlet end of the respective tube.

*Fig.1.*

*Fig.2.*

*Fig.3.*

Fig.9.

Fig.10.

Fig.8.

Fig.7.

Fig.5.

Fig.6.

Fig.4.

# *Fig.11.*

# *Fig.12.*

# *Fig.13.*

SEA BED